# EUROPEAN PATENT SPECIFICATION

(11) **EP 0 827 371 B1**
(45) Date of publication and mention of the grant of the patent: **13.09.2006**
(21) Application number: 97111099.4
(22) Date of filing: 03.07.1997
(51) Int. Cl.: H05H 3/04, B01L 3/00, G02B 21/32

(54) **Laser manipulation apparatus**
Lasermanipulationsvorrichtung
Appareil de manipulation de laser

(30) Priority: 26.08.1996 JP 22335896
(43) Date of publication of application: 04.03.1998
(60) Divisional application: 03019328.8
(73) Proprietor: Moritex Corporation, Tokyo (JP); Japan Science and Technology Agency, Kawaguchi-shi, Saitama 332-0012 (JP)
(72) Inventor: Morito, Yuhkoh, Tokyo (JP); Shikano, Shuji, Yokohama-shi, Kanagawa (JP); Nishioka, Chie, Yokohama-shi, Kanagawa (JP); Horio, Koji, Yokohama-shi, Kanagawa (JP)
(74) Representative: Stachow, Ernst-Walther

(56) References cited:
- EP-A- 0 564 273
- US-A- 4 893 886
- US-A- 5 100 627
- PATENT ABSTRACTS OF JAPAN vol. 015, no. 309 (P-1235), 7 August 1991 & JP 03 110510 A (RES DEV CORP OF JAPAN;OTHERS: 02), 10 May 1991
- PATENT ABSTRACTS OF JAPAN vol. 097, no. 002, 28 February 1997 & JP 08 280375 A (MORITETSUKUSU:KK), 29 October 1996
- PATENT ABSTRACTS OF JAPAN vol. 017, no. 281 (P-1548), 31 May 1993 & JP 05 018887 A (AKIRA MIZUNO;OTHERS: 01), 26 January 1993
- PATENT ABSTRACTS OF JAPAN vol. 095, no. 007, 31 August 1995 & JP 07 104191 A (JASCO CORP;OTHERS: 01), 21 April 1995

## Description

### BACKGROUND OF THE INVENTION

### Field of the Invention

The present invention concerns a laser manipulation apparatus for trapping a micro-sample selected from a group of micro-sample s dispersed and suspended in a liquid medium under the view field of a microscope and separating the trapped sample from other micro-sample s.

### Statement Related Art

For instance, Escherichia coli are often used as micro-sample s for genetic manipulation. In this case, the genetic manipulation is applied by dispersing the samples in a predetermined liquid medium, then Escherichia coli dispersed in the liquid medium are sucked together with the liquid medium by a micropipette or the like, transferred into and cultured in a culture vessel and a great amount of DNA are reproduced.

However, not all of the Escherichia coli dispersed in the liquid medium are genetically manipulated because of the individual difference, and a plurality of Escherichia coli are sucked simultaneously into a micropipette, so that cultured Escherichia coli comprise mixture of those with and without genetic manipulation and the yield for those applied with the genetic manipulation is low.

If culture from a single Escherichia coli is possible, pure culture is enabled and only Escherichia coli subjected to genetic manipulation can be obtained at 100% yield if the starting single Escherichia coli was genetically manipulated.

When it is intended to take out only one of micro-sample s such as biological particles or micro-particles under the view field of an optical microscope, there is no substantial problem if the size of the samples is somewhat large. However, if it is too small as Escherichia coli, since the view field is restricted in view of the optical property of lenses, it is extremely difficult to take out the aimed sample while microscopically confirming that other micro-sample s are not mixed.

For instance, in a case of taking-out a biological particle of 100 *µ*m length, it can be taken-out by using a micropipette of 200 *µ*m diameter while observing that other biological particles are not mixed under a microscope having a lens with a resolution power of 10 µm, a focal depth of 300 *µ*m, NA = 0.034 and a view field diameter of 10 mm. On the other hand, in a case of taking-out a biological particle of only about 1 *µ*m length such as Escherichia coli sucked together with 1 mm³ of a liquid medium into a micropipette, it can not be confirmed that other biological particles are not mixed even if a lens used has a resolution power of 0.26 *µ*m and NA = 1.3 (oil-immersed objective lens having 100 magnification factor), which are the limit of an optical lens, because the focal depth is only 0.2 *µ*m and the view field is only 200 *µ*m.

Further, even if the micro-sample has such a size as can be confirming by a microscope, if a great number of biological particles or like other particles are present in 1 mm³ of a liquid medium to be sucked into a micropipette, the great number of such individuals may possibly be sucked simultaneously or deposited at the top end of the micropipette and mixed upon dropping of the liquid medium. After all, although it is possible to take-out a great number of biological particles simultaneously by sucking a great amount of a liquid medium, it is difficult to take out only one of biological particles or like other particles, and this enforces troublesome repeating diluting operation.

Further, even if the density of micro-sample s present in the liquid medium is low, those moving at a relatively high speed such as Escherichia coli (several µ m to several tens µ m/s) are difficult to be trapped since the operation of a micropipette following after the movement results in stirring of the liquid medium to flow the biological particles by the stream.

It has been proposed, in US Patent No. 5100627, a chamber comprising sample supply channels for flowing a liquid medium in which micro-sample s are dispersed and sample separation channels for flowing a liquid medium in which no micro-sample s are dispersed. They are formed in parallel with each other, and each of the channels is in communication by an interconnection channel. The interconnection channel is conducted intermittently by a bubble valve thereby taking out the micro-sample flowing through the sample supply channel only by one to the sample separation channel.

In this bubble valve, a bubble channel for flowing a bubble-containing liquid medium is formed in parallel with the sample supply channel and the sample separation channel and crossing the interconnection channel, so that the interconnection channel is conducted by filling a liquid medium to the intersection between the bubble channel and the interconnection channel and shut by situating the bubble.

However, in this structure, it is extremely difficult to control the pressure balance between the liquid medium supplied by the bubble channel and the liquid medium filled in the sample supply channel and the sample separation channel.

For instance, when the bubble or the liquid medium is supplied by the bubble channel, since the liquid medium in other channels flows under the effect thereof, it is extremely difficult and not practical to carry out on-off control only for the interconnection channel as desired with no effect on other channels.

Meanwhile, in a case of optically trapping a biological particle, trapping has been conducted by using an IR laser as a light source (refer to Japanese Patent Publication Hei 5-6136, on the basis of the priority of US Patent No. 4893886).

This is based on the result of experiment by Ashkin, et al that light-induced biological damages were observed when biological particles were trapped by using a visible light laser (Ar laser: wavelength at 514 nm) as a light source, whereas no light-induced biological damages were observed when biological samples are trapped by using an IR laser (YAG laser: wavelength at 1064 nm) as a light source.

However, the optical trap by the IR laser involves the following problems compared with the optical trap by the visible light.

At first, since the visible light can be seen, a danger, if caused by entrance of light to an eye, can be avoided by closing an eye lid or interrupting the light, whereas the IR light can not be seen and is liable to damage eyes with no awareness for the entrance of light.

Secondly, since the visible light can be recognized visually, adjustment for the optical system is easy when the apparatus is set, whereas the IR light can not be recognized visually and, therefore, adjustment for the optical system is difficult.

Thirdly, a trapping force is generally weak as a wavelength is longer. For instance, for a polyethylene latex particle of 3 *µ*m size, the trapping force of a YAG laser (IR light: wavelength at 1064 nm) is smaller by 25% than the trapping force of a red light (visible light: wavelength at 600 nm). In the case of 1 *µ*m particle size, the trapping force of the YAG laser is smaller by 45% as compared with the trapping force of the red light.

Fourthly, optical trapping is conducted at a focal position of an objective lens (converging optical system), a beam spot diameter at the focal position is in proportion with a wavelength and the beam spot diameter increases as the wavelength is longer, so that it is more difficult to trap a small sample by the IR light as compared with the visible light.

Fifthly, general-purpose parts for usual microscopes such as lenses, mirrors and other optical elements are used for the laser manipulation apparatus in order to reduce the cost. Since they are designed for the light in the visible light region, if a light in the IR region is used, the optical transmittance is decreased to reduce the efficiency of utilizing the laser light, as well as aberration is increased to lower the light convergence.

For example, in a case of an objective lens of 100 magnification factor, optical transmittance is more than 90% for the red light (visible light: wavelength at 600 nm), whereas the optical transmittance for the YAG laser (IR light: wavelength at 1064 nm) is lowered to less than 30%. Accordingly, in a case of using the IR light, a light source having a power about three times as large as that of the visible light has to be used if it is intended to irradiate a light at a same level of intensity.

Further, in a case of using the IR light, since the aberration of the lens is large, the beam spot diameter at the focal position increases to reduce the trapping force for a small sample.

The foregoings are concerned with the matters of lens design. Accordingly, it is of course technically possible to design such that IR transmittance is improved or aberration is reduced. Then, if optical lenses adapted exclusively for the IR light are used, the problems for optical transmittance or aberration can be overcome. However, in a case of design and manufacture of such products for exclusive use, it results in another problem of increasing the manufacturing cost to increase the cost for the entire apparatus.

The IR light has been used for optical trapping of biological particles irrespective of various drawbacks compared with the visible light, because it is highly demanded for separating a single sample alive, for example, in a case of culturing Escherichia coli applied with genetic manipulation.

In a case of using the technique of optical trapping for taking out a single Escherichia coli, there is a premise that the Escherichia coli is taken out alive as it is. An identical conclusion is also derived from the study of Sakano, et al in addition to Ashkin described above (articles of Static Electricity Society/October, 1991).

According to Sakano, et al, it was reported that when an Ar laser (wavelength at 514 nm) was irradiated to Escherichia coli at 0.64 mW/*µ*m², movement stopped in about 7 sec, whereas the movement did not stop even if irradiation was conducted by applying a YAG laser (wavelength at 1064 nm) for more than two hours at a double intensity of 1.28 mW/*µ*m².

Then, the light-induced damages were compared between the case of 514 nm and 1064 nm wavelength, and it was concluded that the wavelength in the IR region is more safe as compared with the wavelength in the visible light regarding the light-induced damages on biological particles. This denies the possibility of using light at a wavelength in the visible light region for trapping the biological samples .

However, if Escherichia coli can be trapped alive by using a light at a wavelength in the visible light region, various advantages are obtainable compared with the use of a light in the IR light region.

In view of the above, the present inventors, et al have studied on a relationship between the wavelength of a laser light irradiated to biological particles and light-induced damages on the biological particles.

At first, according to the study of F. Bryant (Archives of Biochemistry and Biophysics, vol. 135/1969: Absolute Optical Cross Sections of Cells and Chloroplasts), it is reported that the spectral absorption of Escherichia coli or yeast bacteria varies in the visible light region and that this is not attributable to the light absorption of bacteria but to the scattering of light by bacteria.

When the present inventors, et al made a similar experiment for a light in a wider wavelength range of 150 to 1100 nm by a spectrophotometer using an integrating sphere, it was confirmed that the spectral absorbance changes in accordance with the wavelength as shown by a solid line in Fig. 11 and it was confirmed that Escherichia coli or yeast have large light absorption to the light at a wavelength of shorter than 300 nm, the light absorption is extremely small for the light in a longer wavelength region up to 1100 nm and there is a scarce difference in the absorption depending on the wavelength.

The wavelength of the light of an Ar laser (visible light: wavelength at 514 nm) at which biological damages were observed by the report of Ashkin, et al or Sakano et al is within a region of 300 to 1100 nm that does not result in light absorption upon irradiation on Escherichia coli, etc. and could cause no biological damages. However, since biological damages are actually observed, it is assumed that the biological damages are not caused by linear usual light absorption.

The power density of 0.64 mW/*µ*m² (= 640,000 kW/m²) of the light used in the experiment by Sakano, et al is 640,000 times as high as the power density of 1 kW/m² of sun light irradiated on the ground in fine weather. In the field of light at such a high density, various non-linear interactions are taken place between the light and the substance irradiated therewith and two photon absorption is most likely to occur among them. The two photon absorption is the absorption caused in proportion with the square of the light intensity and does not occur at usual light intensity.

D. Dinkel, et al reported that two photon absorption was observed when a light at 580 nm was irradiated on yeast (Analytica Chemica Acta, 236/1992, Remote Two-Photon Excited Fluorescence Sensing in a Simulated Fermentation Broth). In this experiment, tryptophan as a sort of essential amino acids constituting proteins of yeast absorbed two photons at 580 nm, and took an identical excited state as if they were irradiated with UV-rays at 290 nm, i.e., one-half wavelength of 580 nm.

It can be considered that biological damages were observed for the Ar laser (visible light: wavelength at 514 nm) in the report of Ashkin, et al and Sakano, et al, not because the wavelength was in the visible light region but because the two photon absorption phenomenon resulted in the same state as that irradiated by a light at 257 nm which is one-half wavelength of 514 nm.

In view of the above, the present inventors, et al have come to a conclusion that, in a case of optically trapping biological particles such as Escherichia coli or yeast bacteria by a laser light, biological damages are cause in a case of using a wavelength from 150 nm to 300 nm that is absorbed by proteins or nucleic acids constituting them (Fig. 11; shown by solid line) and in a case of using a laser light having a wavelength from 300 nm and 600 nm that is absorbed by two photon absorption (Fig. 11; shown by dotted line).

Biological particles include those having dyes and not having dyes. Those not having dyes such as Escherichia coli, yeast bacteria and paramecium do not cause light absorption by the dyes, but those having dyes such as Euglenida, corspuscles and photosynthesis bacteria absorb light of particular colors depending on dyes thereof and, in this case, even the IR light which is considered not to cause biological damages by the existent experiment may cause biological damages.

### OBJECT OF THE INVENTION

In view of the above, it is the object of the present invention to provide a situation in which only one micro-sample is present in a liquid medium to be sucked at once and enable to surely separate and take!out only one of biological particles including those moving rapidly such as Escherichia coli without confirming by a microscope, and to enable reliable optical trapping without causing biological damages in a case of using a laser beam at a wavelength in the visible light region.

### SUMMARY OF THE INVENTION

The foregoing object can be attained according to the present invention by a laser manipulation apparatus in according with claim 1.

In preferred embodiment the apparatus comprises a cell plate comprising a plate main body having a first cell for storing a liquid medium in which a great number of micro-sample s are dispersed and suspended and a second cell (11B) for storing a liquid medium in which no micro-sample s are suspended, each of the first and second cells being opened at the upper surface, spaced apart from each other by a predetermined distance, and in communication with each other by way of a narrow induction channel for inhibiting free movement of the micro-sample s, and wherein the apparatus comprises
a optical trapping system for irradiating a laser light to a single micro-sample selected from the group of micro-sample s dispersed and suspended in the liquid medium stored in the first cell of the cell plate thereby trapping the single micro-sample , and
a sample separation device for moving the single micro-sample from the first cell through the induction channel into the second cell by moving the cell plate or scanning the laser light in a state of trapping the single micro-sample by the optical trapping system.

According to a preferred embodiment, the liquid medium in which micro-sample s are not suspended is injected into and stored in the second cell formed to the cell plate, and then the liquid medium in which the micro-sample s are dispersed and suspended is injected into and stored in the first cell. In this case, since the first cell and the second cell are in communication with each other by way of the narrow induction channel for inhibiting the free movement of the micro-sample s, the micro-sample does not transfer to the second cell in a short period of time.

Then, the laser light is irradiated to a particular micro-sample in a plurality of micro-sample s dispersed and suspended in the liquid medium stored in the first cell to trap the particular micro-sample and then the micro-sample is moved compulsorily from the first cell through the induction channel to the second cell by moving the cell plate or scanning the laser light while trapping the micro-sample as it is.

In this case, since only one micro-sample trapped by the laser beam is moved to the second cell and only one micro-sample is present in the second cell, when the liquid medium in the second cell is sucked by a micropipette, the micro-sample is surely sucked only by one.

By closing the upper opening of the second cell with a cover sliding in the horizontal direction at the time when the liquid medium in which the micro-sample s are not suspended is injected into and stored in the second cell and then covering the upper opening of the first cell with a cover sliding in the horizontal direction at the time when the liquid medium in which micro-sample s are dispersed and suspended is injected into and stored in the first cell, since the first cell and the second cell filled with the liquid medium are tightly closed, the liquid medium is less evaporated and, accordingly, the liquid medium does not flow between each of the cells caused by evaporation.

Further, when the wavelength of the laser light irradiated for optically trapping the micro-sample is set to a visible light region of larger than 600 nm, since the wavelength is out of a range of 150 to 300 nm which is absorbed by proteins and nucleic acids constituting biological particles and is also out of a range from 300 to 600 nm which is absorbed by two photon absorption, no biological damages are caused in a case of optically trapping the biological particle not having a dye as the micro-sample .

In addition, since the light has a wavelength in a visible light region and can be recognized visually, a danger when the light enters the eye can be avoided and adjustment for the optical system when the apparatus is set is also facilitated.

Further, since the wavelength is shorter compared with the IR light, the trapping force is more intense assuming that the power of the light is identical. Further, since the beam spot diameter at the focal position is in proportion with the wavelength, the beam spot diameter is reduced as compared with the IR light and a small sample microbial can be trapped easily as compared with the IR light.

Then, if general purpose parts for usual microscopes such as lenses, mirrors and like other optical elements are used for the laser manipulation apparatus in order to reduce the cost, optical performances such as transmittance and aberration are not deteriorated thereby enabling to reduce the cost for the entire apparatus.

Further, in a case of using biological particles having a dye as the micro-sample s, if the wavelength of the laser light is selected such that it is not absorbed by the dye of the micro-sample s, the wavelength is out of a range from 150 to 300 nm which is absorbed by proteins or nucleic acids constituting the biological particles, and also out of a range from 300 to 600 nm which is absorbed by two photon absorption, and the light is selected to such a wavelength as not absorbed by the dye of the micro-sample s, biological damages are not caused in a case of optically trapping the biological particle having a dye as the micro-sample .

### BRIEF DESCRIPTION OF THE DRAWINGS

Fig. 1 is a schematic explanatory view illustrating a laser manipulation apparatus according to the present invention;

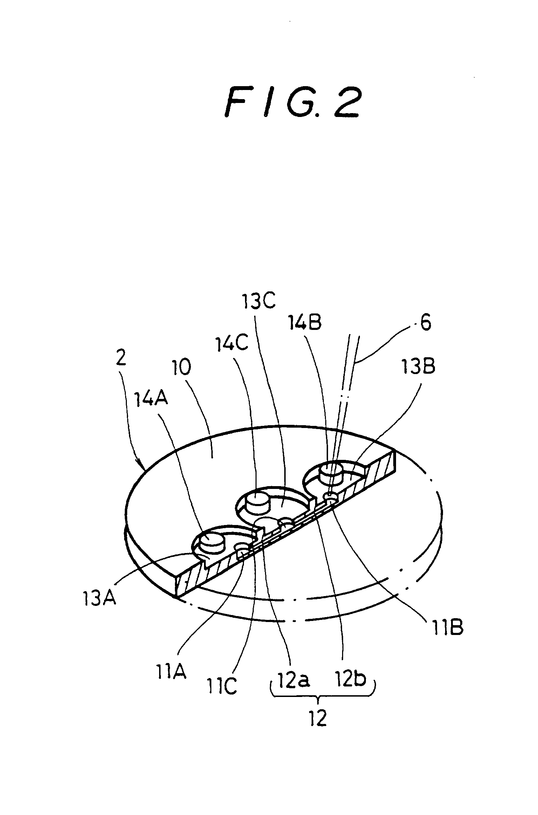

Fig. 2 is a perspective cross sectional view illustrating a cell plate used therefor;
Fig. 3(a) - (f) are explanatory views illustrating operation procedures;
Fig. 11 is a graph illustrating absorption of Escherichia coli.

### DESCRIPTION OF THE PREFERRED EMBODIMENTS

The present invention will now be explained more specifically by way of preferred embodiments with reference to the drawings.

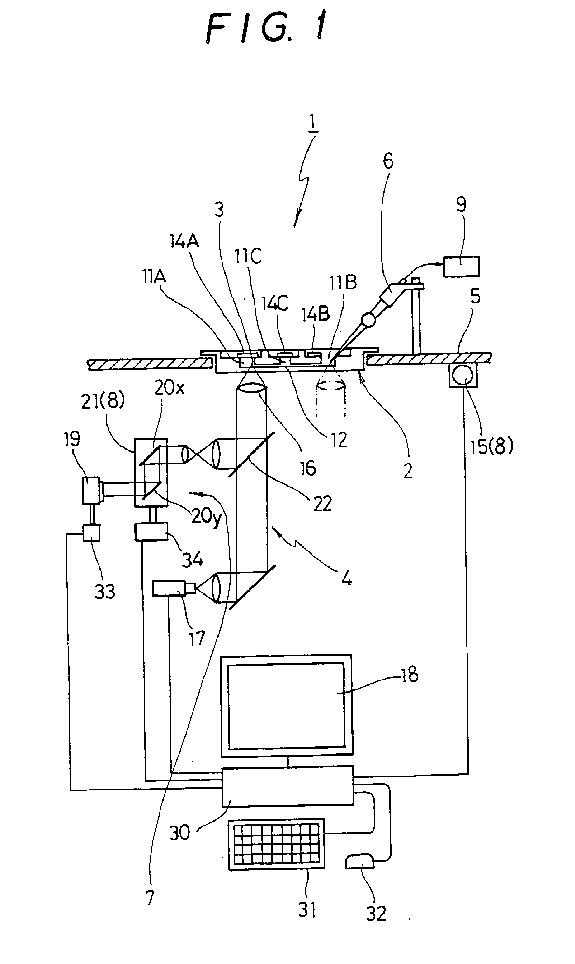

Fig. 1 is a schematic explanatory view illustrating one embodiment of a laser manipulation apparatus according to the present invention. The laser manipulation apparatus 1 is used for taking out a single biological particle (micro-sample) 3 selected from a group of biological particles (group of micro-sample s) dispersed and suspended in a liquid medium possessed in a cell plate 2. The cell plate 2 is placed on a stage 5 of an inverting microscope 4, and a micropipette 6 for sucking the micro-sample 3 is disposed advanceable and retractable to the cell plate 2.

The laser manipulation apparatus 1 comprises an optical trapping system for irradiating a laser light to the micro-sample 3 selected from micro-sample s dispersed and suspended in a liquid medium under the view of the microscope 4 and trapping the micro-sample at an trapping position, a sample separation device 8 for moving the cell plate 2 or scanning laser light in a state of trapping the micro-sample 3 thereby separating the micro-sample 3 from other micro-sample s, and a sample sucking device 9 for sucking the separated particular micro-sample 3 into the micropipette 6.

The cell plate 2 for possessing the liquid medium comprises a plate main body 10 that functions as a cover glass for the inverting microscope 4, a first cell 11A for storing a liquid medium in which a great number of micro-sample s are dispersed and suspended and a second cell 11B for storing a liquid medium in which no micro-sample s are suspended. Each of the cells is opened at the upper surface and formed by being spaced apart a predetermined distance from each other and in communication with each other by a narrow induction channel 12 for inhibiting the free movement of micro-sample s.

Accordingly, the induction channel 12 has a bottom formed at a high accuracy as a cover glass for the inverting microscope 4 and has a buffer cell 11C formed with the upper surface being opened at the midway for storing a liquid medium in which no micro-sample s are suspended.

The induction channel 12 comprises a first induction channel 12a for communication between the first cell 11A and the buffer cell 11C and a second induction channel 12b for communication between the buffer cell 11C and the second cell 11B.

Each of the cells 11A - 11C is formed in each of recesses 13A - 13C of a larger diameter as a liquid medium injection port formed on the surface of the plate main body 10. The upper opening for each of the cells 11A - 11C is adapted to be opened/closed by each of covers 14A - 14C which is moved slidably in the horizontal direction along the bottom of the recesses 13A - 13C.

Faces of the recesses 13A - 13C and the covers 14A - 14C in contact with each other are polished at a high accuracy such that they are in sliding contact at a gap formed with accuracy on the order of a wavelength of light. Then, each of the cells can be opened/closed without forming a stream in the induction channel 12 when each of the covers 14A - 14C is caused to slide.

In the cell plate 2 for separating Escherichia coli, each of the recesses 13A - 13C is about 9 mm diameter x 2 mm depth, each of the cells 11A - 11C is about 2 mm diameter x 1.8 mm depth, the length of the induction channel 12a and 12b for communication between the cells 11A and 11C and between the cells 11C and 11B is about 9 mm, the cross section for each of the induction channel 12a, 12b is about 0.1 mm square, and the thickness for the bottom of each cell 11A - 11C and the induction channel 12 is about 0.17 mm.

An objective lens 15 of the inverting microscope 4 is placed below the stage 5 disposed moveably in the direction X-Y by a stage moving device 15, a CCD camera 17 for photographing the inside of the plate 2 is set on an optical axis of the microscope, and images taken up by the CCD camera 17 are displayed on a display device 18.

The optical trapping system 7 is adapted such that the micro-sample 3 in the first cell 11A is trapped by a laser light transmitting the objective lens 16 of the inverting microscope 4. A scanning device 21 having scanning mirrors 20x, 20y for moving the trapping position of the laser light in the direction X and the direction Y and a dichroic mirror 22 are intervened in the optical channel of the laser light outputted from the laser light source 19, and the laser light reflected on the dichroic mirror 22 is adapted to transmit the objective lens 16 and converted into the first cell 11A.

In a case of optically trapping the biological sample not having a dye such as Escherichia coli as the micro-sample , the wavelength of the laser light emitted from the laser light source 19 is included within a visible light region and selected to longer than 600 nm, and a semiconductor laser that oscillates a light at a wavelength of 690 nm is used in this embodiment.

As the objective lens 16, a liquid-immersed objective lens, for example, having a magnification factor of 100 and NA = 1.30 is used.

The sample separation device 8 is adapted to move the micro-sample 3 from the first cell 11A through the induction channel 12 into the second cell 11B and separate the sample 3 from other micro-sample s in the first cell 11A by moving the cell plate 2 by the stage moving device 15 or scanning the laser light by the scanning device 21, in a state of trapping the particular micro-sample 3 by the optical trapping system 7.

As the sample suction device 9 for the micropipette 6, any of means can be adopted, for example, means for conducting suction/exhaustion by displacing diaphragms comprised of an elastic membrane thereby changing the volume in the pipette 6, or means for controlling the temperature in the pipette 6 and conducting suction/exhaustion by utilizing the volumic change of air due to the change of temperature in the pipette. Further, the micropipette 6 is attached to the top end of a manipulator arm (not illustrated), adapted to reciprocate, for example, between the apparatus and a microplate (not illustrated) provided with culture medium, and is adapted to discharge sucked micro-sample s on a predetermined microplate.

A control device 30 for controlling the laser manipulation apparatus 1 has the CCD camera 17, a keyboard 31 and a mouse 32 connected on its input and the display device 18, the diving device 33 for the laser light source 19, the driver 34 for the laser scanning device 21 and the stage moving device 15 connected on its output.

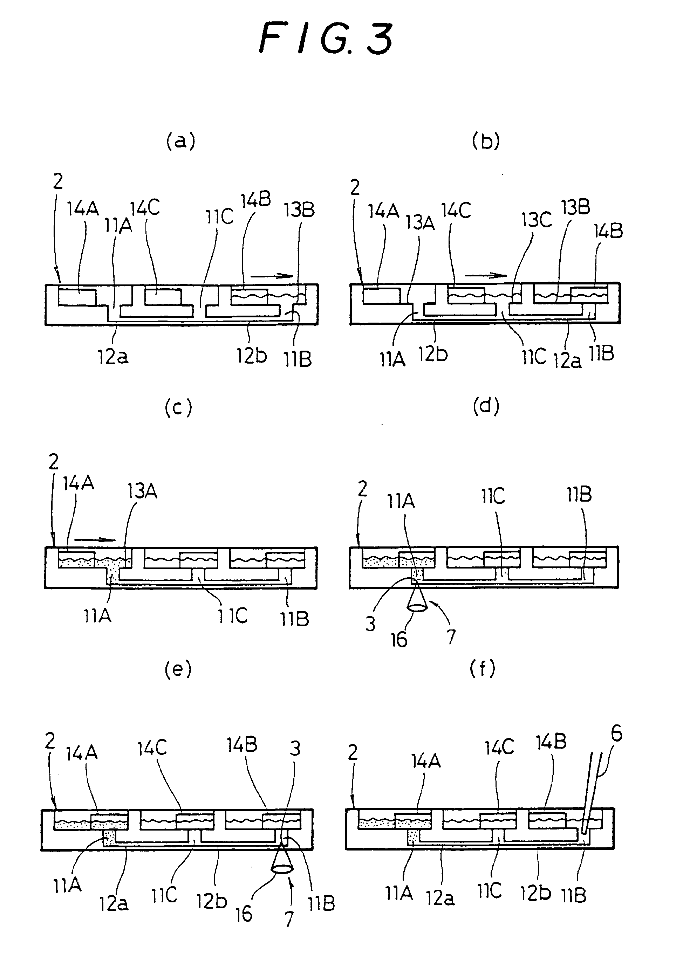

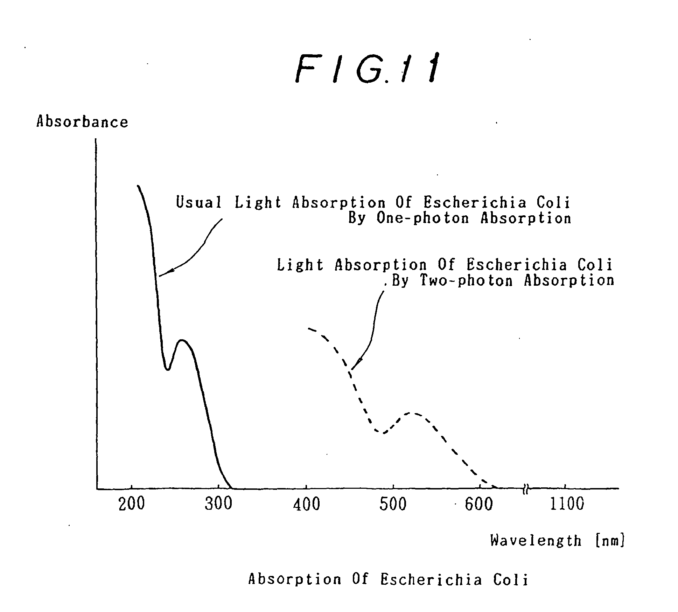

The operation of the embodiment of the apparatus according to the present invention as described above will be explained with reference to Fig. 3(a) - (f).

At first, the cell plate 2 is set on the stage 5 and, as shown in Fig. 3(a), a clean liquid medium in which no micro-sample s are present is injected into the recess 13B in which the second cell 11B is formed and, when the cover 14B is immersed in the liquid medium, the cover 14B is caused to slide to close the upper opening of the second cell 11B. In this process, the liquid medium in the second cell 11B flows through the induction channel 12b into the buffer cell 11C by a capillary phenomenon.

Then, as shown in Fig. 3(b), a clean liquid medium in which no micro-sample s are present is injected into the recess 13C in which the buffer cell 11C is formed and, when the cover 14C is immersed in the liquid medium, the upper opening of the buffer cell 11C is closed by sliding the cover 14C. In this step, the liquid medium in the buffer cell 11C flows in the induction channel 12a into the first cell 11A by a capillary phenomenon.

Then, as shown in Fig. 3(c), a liquid medium in which a great number of micro-sample s are dispersed and suspended is injected into the recess 13A in which the first cell 11A is formed and, when the cover 14A is immersed in the liquid medium, the upper opening of the first cell 11A is closed by sliding the cover 14A.

Since the faces of the cover 14A and recess 13A in sliding contact with each other are polished at a high accuracy, there is no worry that the liquid medium in the first cell 11A flows through the induction channels 12a, 12b into the buffer cell 11C or the second cell 11B.

Further, all of the upper openings for the cells 11A - 11C are closed by the covers 14A - 14C, respectively, and each of the covers 14A - 14C is immersed in the liquid medium. Therefore, even when the liquid medium is evaporated, only the liquid medium stored in the recesses 13A - 13C at the outside of each of the cells 11A - 11C closed by the covers 14A - 14C is evaporated, which gives no effect on the inside of each of the cells 11A - 11C. Accordingly, the liquid medium in the cells 11A - 11C is maintained in a stationary state and there is no worry of forming a stream in the induction channel 12.

When a laser beam is irradiated by the scanning device 22 to an optional micro-sample 3 while observing the inside of the first cell 11A by the display device 14 in this state, the micro-sample 3 is trapped at that position as shown in Fig. 3(d).

Since the wavelength of the laser light is selected to 690 nm, which is out of a range for the wavelength from 150 to 600 nm at which the micro-sample 3 causes light absorption and two photon absorption, the micro-sample 3 can be optically trapped with no damages.

Then, as shown in Fig. 3(e), by moving the stage 5 by the stage moving device 15, the particular micro-sample 3 trapped by the laser light is moved from the first cell 11A through the induction channel 12a to the buffer cell 11C and, further, through the induction channel 12b to the second cell 11B.

In this process, since the induction channel 12 for communication between the first cell 11A and the second cell 11B is formed so narrow as capable of inhibiting the free movement of the micro-sample s, a probability that other micro-sample s in the first cell 11A swim through the induction channel 12 and reach the second cell 11B is extremely low and, accordingly, only the particular micro-sample 3 trapped by the laser beam is present in the second cell 11B.

Further, in this embodiment, since the buffer cell 11C is formed in the midway of the induction channel 12, if any micro-sample swims from the first cell 11A passing through the induction channel 12a and reaches the buffer cell 11C, it scarcely occurs that such sample from the buffer cell 11C reaches the second cell 11B passing through the induction channel 12b and, accordingly, only the particular micro-sample 3 trapped by the laser light is present and no other micro-sample s are present in the second cell 11B.

Finally, as shown in Fig. 3(f), when the upper opening of the second cell 11B is opened by sliding the cover 14B and the liquid medium in the second cell 11B is entirely sucked by the micropipette 6, only the micro-sample 3 trapped by the laser light is present in the liquid medium, a single micro-sample can surely be sucked without using no special narrow micropipette 6 or without confirming the inside of the second cell 11B by the microscope 4.

Then, the micropipette 6 is moved to the microplate provided with a culture medium (not illustrated), for example, by using a manipulator arm (not illustrated) and the micro-sample 3 is discharged together with the liquid onto in the microplate. Thus, Escherichia coli applied with genetic manipulation can be cultured purely from a single bacteria cell at 100% yield.

It is not limited that the buffer cell 11C is formed at the midway of the induction channel 12 only by one but may be formed by any optional number as required, and further it may be saved depending on the case.

Further, the micro-sample s are not necessarily biological particles such as Escherichia coli but may be other particles.

In addition, although explanation has been made in this embodiment to a case of forming the first cell 11A and the second cell 11B each by one to the cell plate, the present invention is not restricted only thereto, but the second cell 11B may be formed in plurality, each of which may be in communication the first cell 11A by way of the induction channel.

In this case, after injecting a liquid medium in which no micro-sample s are suspended in all of the second cells 11B and then closing the upper opening for each of the cells with the cover 14B, a liquid medium in which the micro-sample s are dispersed and suspended may be injected into the first cell 11A and the upper opening may be closed by the cover 14A finally.

As has been described above, in this embodiment, when the laser light is irradiated on the particular micro-sample 3, among the group of the micro-sample s dispersed and suspended in the liquid medium stored in the first cell 11A, to trap the micro-sample 3 and then the cell plate 2 is moved or the laser light is caused to scan while trapping the micro-sample 3, the micro-sample 3 can be moved from the first cell 11A through the induction channel 12 to the second cell 11B compulsorily.

As described above, when only one micro-sample trapped by the laser light is moved into the second cell 11B, since only one micro-sample is present in the second sell 11B, if the liquid medium in the second cell 11B is sucked by the micropipette, even micro-sample s swimming rapidly such as Escherichia coli can be surely separated and taken out only by one without confirming by the microscope, to provide an excellent effect.

According to this embodiment, since the wavelength of the laser light irradiated for optically trapping the micro-sample 3 is 690 nm, the wavelength is out of the range of 150 to 300 nm which is absorbed by proteins or nucleic acids constituting biological particle and which is also out of the range from 300 to 600 nm which is absorbed by two photon absorption, no biological damages are caused in a case of optically trapping a microbial particle not having a dye as the micro-sample

In addition, since the wavelength is included within the region of visible light and can be observed visually, a danger upon entrance of light to an eye can be avoided, and adjustment for the optical system upon assembling the micromanipulator 1 is facilitated.

Further, since the wavelength is shorter as compared with the IR light, a trapping force is greater for the identical power of light. Further, since the beam spot diameter at the focal position is in proportion with the wavelength, the beam spot diameter is reduced as compared with that of the IR light to trap a small sample more easily compared with the IR light.

Then, even when general-purpose parts for usual microscopes at a relatively reduced cost are used as lenses, mirrors and like other optical elements for the micromanipulator 1, optical performances such as transmittance and aberration are not reduced.

In the foregoings, explanations have been made to a case of optically trapping the biological particles not having a dye such as Escherichia coli as the micro-sample . In a case of optically trapping a biological particle having a dye as the micro-sample , the wavelength of the laser light source 19 of the optical trapping system 7 is selected to such a wavelength of visible light longer than 600 nm and not absorbed by the dye of the micro-sample .

For example, in a case of using Euglenida as the micro-sample s, since the chlorophyll as the dye thereof absorbs light at a wavelength of from 400 to 700 nm, a laser light at a wavelength of longer than 700 nm has to be irradiated for trapping the same.

That is, in a case of optically trapping a biological particle having a dye as the micro-sample , light-induced damages may be caused, irrespective that the wavelength of the light to be irradiated is that of the visible light.

This is attributable to the light absorption of the dye inherent to the biological particles.

Accordingly, if the wavelength is selected so as to be out of the range of the wavelength region from 150 to 600 nm which is absorbed by the proteins or nucleic acids constituting the biological particles by light absorption and two photon absorption' and to a wavelength not absorbed by the dye of the biological particle, optical trapping can be carried out without causing light-induced biological damages.

In this case, if the wavelength not absorbed by the dye of the biological particle includes the wavelength of the visible light region, the foregoing advantages can also be obtained by using the light of such a wavelength as described above compared with the case of using the IR light.

If the wavelength of the laser light for conducting optical trapping is selected to longer than 600 nm in the visible light region, since this is out of the range of the wavelength from 150 to 600 nm of the light that causes light absorption and two photon absorption in the biological particle, biological damages are not caused in a case of optically trapping the biological particle not having a dye as the micro-sample .

Further, since the wavelength is included in the region of the visible light and can be observed visually, a danger, if the light enters an eye, can be avoided, as well as adjustment for the optical system when the apparatus is set is also facilitated.

Further, since the wavelength is shorter as compared with the IR light, the trapping force is more intense for the identical power of light and since the beam spot diameter at the focal point is smaller as compared with that of the IR light, a small sample can be trapped easily compared with the IR light.

Furthermore, it also provides an excellent effect that optical performances such as transmittance and aberration are not reduced even when general-purpose parts for usual microscopes are used as lenses, mirrors and like other optical elements for the laser manipulation apparatus, whereby the entire cost of the apparatus can be reduced.

Further, in a case of using biological particles having a dye as the micro-sample s, if the wavelength of the laser light is set to such a wavelength as longer than 600 nm and not absorbed by the dye of the micro-sample s, it can provide an advantageous effect capable of surely trapping, without causing biological damages, even those biological particles suffering from biological damages when trapped optically by the IR light which has been considered not to cause biological damages.

When the particular microbiological sample or other particle trapped by the laser light is sucked by the micropipette in the state, since only one biological particles or other particles is positioned near the top end of the micropipette and no other biological particles or other particles are present, this provides an excellent effect capable of surely sucking only one micro-sample or other particle even if the micropipette of a relatively large top end is used.

## Claims

1. A laser manipulation apparatus comprises a converging optical system, a laser and a cell plate, comprising a cell for storing a medium, adapted for irradiating a laser light of the laser through the converging optical system (16) having a focal point in the medium in which micro-samples may be suspended to said medium, and for concentrating the laser light to the focal position of the converging optical system (16) for thereby optically trapping a micro-sample (3) at the focal position, **characterised in that** the wavelength of the laser light is selected such that it is included within a region of visible light and such to be longer than 600 nm.

2. A laser manipulation apparatus according to claim 1, **characterized in that**
- the cell plate (2) comprises a plate main body (10) having a first cell (11A) for storing a liquid medium in which a great number of micro-samples are dispersed and suspended and a second cell (11B) for storing a liquid medium in which no micro-samples are suspended, each of said first and second cells being opened at the upper surface, spaced apart from each other by a predetermined distance and being in communication with each other by way of a narrow induction channel (12) for inhibiting free movement of the micro-samples,
- the converging optical system is an optical trapping system (7) for irradiating a laser light to a single micro-sample (3) selected from the group of the micro-samples dispersed and suspended in the liquid medium stored in the first cell (11A) of the cell plate (2) for thereby trapping said single micro-sample (3), and
- the apparatus comprises a sample separation device (8) for moving said single micro-sample (3) from the first cell (11A) through the induction channel (12) into the second cell (11B) by moving the cell plate (2) or scanning the laser light in a state of trapping the single micro-sample (3) by the optical trapping system (7).

3. A laser manipulation apparatus according to claim 2, wherein the bottom of the induction channel (12) is formed with a plane finished at a high accuracy that constitutes a cover glass for an inverting microscope (4).

4. A laser manipulation apparatus according to claim 3, wherein the upper opening for each of the cells (11A, 11B) is openable and closeable by a cover (14A, 14B) slidable in a horizontal direction.

5. A laser manipulation apparatus according to claim 4, wherein recesses (13A, 13B) are formed on the surface of the plate main body (10) for dipping each of the covers (14A, 14B) closing the upper opening for each of the cells (11A, 11B), into the liquid medium stored in each of the cells.

6. A laser manipulation apparatus according to one of claims 2 to 5, wherein the cell plate further comprises at least one buffer cell (11C) formed with the upper surface being opened, to the midway of the induction channel (12), for storing a liquid medium in which no micro-samples are suspended,

7. A laser manipulation apparatus according to claim 6, wherein the upper opening for each of the cells (11A - 11C) is openable and closeable by each of covers (14A - 14C) slidable in a horizontal direction.

8. A laser manipulation apparatus according to claim 7, wherein recesses (13A - 13C) are formed on the surface of the plate main body (10) for dipping each of the covers (14A - 14C), closing the upper opening for each of the cells (11A - 11C), into a liquid medium stored in each of the cells (11A - 11C).

## Patentansprüche

1. Lasermanipulationsvorrichtung mit einem konvergierenden optischen System, einem Laser und mit einer Zellenplatte, die eine Zelle zur Aufbewahrung eines Mediums umfasst, eingerichtet zur Einstrahlung von Laserlicht des Lasers durch das konvergierende optische System (16), das einen Brennpunkt im Medium hat, wobei in dem Medium Mikroproben suspendiert sein können, und zum Konzentrieren des Laserlichts im Brennpunkt des konvergierenden optischen Systems (16), um **dadurch** eine Mikroprobe (3) in der Brennpunktlage einzufangen, **dadurch gekennzeichnet, dass** die Wellenlänge des Laserlichts so gewählt wird, dass sie im Bereich des sichtbaren Lichts liegt und länger als 600 nm ist.

2. Lasermanipulationsvorrichtung nach Anspruch 1, **dadurch gekennzeichnet, dass**
- die Zellenplatte (2) einen Hauptkörper (10) der Platte mit einer ersten Zelle (11A) zum Unterbringen eines flüssigen Mediums, in dem eine große Zahl von Mikroproben dispergiert und suspendiert ist, und mit einer zweiten Zelle (11B) zum Unterbringen eines flüssigen Mediums, in dem keine Mikroproben suspendiert sind, aufweist, wobei erste und zweite Zelle an der Oberseite offen, mit einer vorbestimmten Entfernung beabstandet und miteinander durch einen engen Zuführkanal (12) verbunden sind, um die freie Bewegung der Mikroproben zu verhindern,
- das konvergierende optische System ein optisches Einfangsystem (7) zur Einstrahlung von Laserlicht auf eine einzelne aus der Gruppe der in dem in der ersten Zelle (11A) der Zellenplatte (2) untergebrachten flüssigen Medium dispergierten und suspendierten Mikroproben ausgewählten Mikroprobe (3), um **dadurch** die einzelne Mikroprobe (3) einzufangen, ist und
- die Vorrichtung ein Probentrenngerät (8) zum Verschieben der einzelnen Mikroprobe (3) aus der ersten Zelle (11A) durch den Zuführkanal (12) in die zweite Zelle (11B) mittels Bewegen der Zellenplatte (2) oder Abtastbewegung des Laserlichts im eingefangenen Zustand der Mikroprobe durch das optische Einfangsystem (7) aufweist.

3. Lasermanipulationsvorrichtung nach Anspruch 2, wobei der Boden des Zuführkanals (12) mit einer hochpräzis bearbeiteten Oberfläche ausgebildet ist, die das Deckglas für ein Inversmikroskop darstellt.

4. Lasermanipulationsvorrichtung nach Anspruch 3, wobei die obere Öffnung jeder Zelle (11A, 11B) durch einen horizontal verschiebbaren Deckel (14A, 14B) geöffnet und geschlossen werden kann.

5. Lasermanipulationsvorrichtung nach Anspruch 4, wobei an der Oberfläche des Hauptkörpers (10) der Platte Ausnehmungen (13A, 13B) ausgebildet sind, um die Deckel (14A, 14B), welche die oberen Öffnungen jeder Zelle (11A, 11B) verschließen, in das in jeder Zelle aufbewahrte flüssige Medium einzutauchen.

6. Lasermanipulationsvorrichtung nach einem der Ansprüche 2 bis 5, wobei die Zellenplatte ferner mindestens eine Pufferzelle (11C) aufweist, die oben offen auf halbem Weg am Zuführkanal (12) ausgebildet ist, um ein flüssiges Medium, in dem keine Mikroproben suspendiert sind, unterzubringen.

7. Lasermanipulationsvorrichtung nach Anspruch 6, wobei die obere Öffnung jeder der Zellen (11A - 11C) durch jeden der horizontal verschiebbaren Deckel (14A - 14 C) geöffnet und verschlossen werden kann.

8. Lasermanipulationsvorrichtung nach Anspruch 7, wobei in der Oberfläche des Hauptkörpers (10) der Platte Ausnehmungen (13A - 13C) ausgebildet sind, um die Deckel (14A - 14C), welche die oberen Öffnungen jeder Zelle (11A - 11C) verschließen, in das in den Zellen (11A - 11C) aufbewahrte flüssige Medium einzutauchen.

## Revendications

1. Appareil de manipulation par laser comprenant un système optique convergent, un laser et une plaque de cellules, comprenant une cellule pour stocker un milieu, adapté pour irradier une lumière laser du laser au travers du système optique convergent (16) présentant un point focal dans le milieu où des micro-échantillons peuvent être suspendus dans ledit milieu, et pour concentrer la lumière laser à la position focale du système optique convergent (16) pour ainsi piéger optiquement un micro-échantillon (3) à la position focale, **caractérisé en ce que** la longueur d'onde de la lumière laser est sélectionnée de telle sorte qu'elle soit incluse à l'intérieur d'une région de la lumière visible et de telle sorte qu'elle soit plus longue que 600 nanomètres.

2. Appareil de manipulation par laser selon la revendication 1, **caractérisé en ce que** :
la plaque de cellules (2) comprend un corps principal de plaque (10) qui comporte une première cellule (11A) pour stocker un milieu liquide dans lequel un grand nombre de micro-échantillons sont dispersés et suspendus et une seconde cellule (11B) pour stocker un milieu liquide dans lequel aucun micro-échantillon n'est suspendu, chacune desdites première et seconde cellules étant ouverte au niveau de la surface supérieure, les cellules étant espacées l'une de l'autre d'une distance prédéterminée et étant en communication l'une avec l'autre au moyen d'un canal d'induction étroit (12) pour inhiber un déplacement libre des micro-échantillons ;
le système optique convergent est un système de piégeage optique (7) pour irradier une lumière laser sur un unique micro-échantillon (3) qui est sélectionné parmi le groupe des micro-échantillons qui sont dispersés et suspendus dans le milieu liquide qui est stocké dans la première cellule (11A) de la plaque de cellules (2) pour ainsi piéger ledit unique micro-échantillon (3) ; et
l'appareil comprend un dispositif de séparation d'échantillon (8) pour déplacer ledit unique micro-échantillon (3) depuis la première cellule (11A) au travers du canal d'induction (12) dans la seconde cellule (11B) en déplaçant la plaque de cellules (2) ou en balayant la lumière laser dans un état de piégeage de l'unique micro-échantillon (3) au moyen du système de piégeage optique (7).

3. Appareil de manipulation par laser selon la revendication 2, dans lequel le fond du canal d'induction (12) est formé avec une plaque qui est finie selon une précision élevée, laquelle constitue un verre de recouvrement pour un microscope en inversion (4).

4. Appareil de manipulation par laser selon la revendication 3, dans lequel l'ouverture supérieure pour chacune des cellules (11A, 11B) peut être ouverte et fermée par un couvercle (14A, 14B) qui peut coulisser suivant une direction horizontale.

5. Appareil de manipulation par laser selon la revendication 4, dans lequel des évidements (13A, 13B) sont formés sur la surface du corps principal de plaque (10) pour immerger chacun des couvercles (14A, 14B), en fermant l'ouverture supérieure pour chacune des cellules (11A, 11B), dans le milieu liquide qui est stocké dans chacune des cellules.

6. Appareil de manipulation par laser selon l'une des revendications 2 à 5, dans lequel la plaque de cellules comprend en outre au moins une cellule tampon (11C) qui est formée avec la surface supérieure qui est ouverte, jusqu'à mi-chemin du canal d'induction (12), pour stocker un milieu liquide dans lequel aucun micro-échantillon n'est suspendu.

7. Appareil de manipulation par laser selon la revendication **6,** dans lequel l'ouverture supérieure pour chacune des cellules (11A-11C) peut être ouverte et fermée au moyen de chacun de couvercles (14A-14C) pouvant coulisser suivant une direction horizontale.

8. Appareil de manipulation par laser selon la revendication 7, dans lequel des évidements (13A-13C) sont formés sur la surface du corps principal de plaque (10) pour immerger chacun des couvercles (14A-14C), en fermant l'ouverture supérieure pour chacune des cellules (11A-11C), à l'intérieur d'un milieu liquide qui est stocké dans chacune des cellules (11A-11C).
